# EUROPEAN PATENT SPECIFICATION

(11) **EP 2 135 765 B1**
(45) Date of publication and mention of the grant of the patent: **25.12.2013**
(21) Application number: 09380121.5
(22) Date of filing: 18.06.2009
(51) Int. Cl.: B60J 10/08, B60J 5/04, E06B 7/23, B60J 5/06, E06B 7/215

(54) **Actuation device for a seal for lower edges of pivoted doors**
Auslösungsvorrichtung für eine Dichtung der unteren Ränder von Schwenktüren
Dispositif d'actionnement pour joint de bords inférieurs de portes pivotantes

(30) Priority: 20.06.2008 ES 200801849
(43) Date of publication of application: 23.12.2009
(73) Proprietor: Masats, S.A., 08253 Sant Salvador De Guardiola (ES)
(72) Inventor: Puig Tomas, Roger, 08253 Sant Salvador de Guardiola (ES); Bou Corominas, Joan, 08253 Sant Salvador de Guardiola (ES)
(74) Representative: Sugrañes Patentes y Marcas

(56) References cited:
- DE-A1- 3 205 562
- DE-U1- 20 000 873
- DE-U1-202005 011 928
- GB-A- 2 362 178

## Description

### Technical Field of the Invention

The invention relates to an actuation device for a seal for lower edges of pivoted doors, particularly doors of coaches or buses, to cover the gaps between said edges and the floor of the vehicle. The device is applicable for seals of the type comprising a lower part rotating about a longitudinal axis between two positions, the first of which is an essentially vertical downward position whereas the second of which is an obliquely raised position.

### Background of the Invention

Seals are pieces of plastic material which are fixedly assembled in the lower edge of doors to ensure the tight closure, the passage of water into the interior being prevented as much as possible.

Among the access door systems applied in the sector of public transport vehicles, such as buses or coaches, that in which one of the vertical edges of the doors, in the opening and closing movements thereof, moves in the vertical plane of the door opening between two end rest positions corresponding to the open and closed positions of the door, whereas the door is assembled pivoting about a vertical axis of rotation integral with the end of a rotating drive lever in a horizontal plane, flush with the floor, is frequent. This drive lever describes alternating back and forth angular movements for the opening and closing of the door such that the latter simultaneously rotates about the mentioned vertical axis.

The seals used in this type of door are designed to be deformed when the door performs its opening movement and to be able to overcome the obstacle of the drive arm which, despite being arranged flush with the floor, has a significant height compared to the gap between the edge of the door and the floor of the vehicle. Document DE 20 2005 011928 U1 describes an example of this type of realizations.

The flexibility of the seals is conditioned to the obstacle represented by the drive arm, such that excessively rigid seals offer high resistance and hinder the normal operation of the doors. On the other hand, seals that are too soft or flexible can reduce the required or desirable tightness features.

In short, these seals adopt an extended position by default, in which they cover the gap between the lower edge of the door and the floor of the vehicle, and as they sweep the floor and the obstacles encountered while the door moves they are forced to be deformed and adopt an obliquely raised position. This means that when the door returns to its original position, the seals have to be deformed again, in a direction opposite to the previous one, to again recover their original position as they leave behind the obstacles overcome during the opening manoeuvre.

A main objective of the invention is to disclose an alternative to conventional seals, which behave passively and are deformed, by friction, by the obstacles located under the door during the opening and closing manoeuvres.

### Disclosure of the Invention

The actuation device for a seal according to the invention is particularly intended for seals for lower edges of pivoted doors which, in the opening and closing movements, maintain one of their vertical edges in the vertical plane of the door opening, moving between two end rest positions corresponding to the open and closed positions of the door, whereas the doors rotate about a vertical axis of rotation integral with the end of a rotating drive lever, in a horizontal plane and flush with the floor which describes alternating back and forth angular movements for the opening and closing of the door, the seal being of those comprising a lower part rotating about a longitudinal axis between two positions, the first of which is an essentially vertical downward position and the second of which is an obliquely raised position.

The device is **characterised in that** it comprises elastic means acting on the lower part of the seal and tending to maintain it in the mentioned second obliquely raised position.

In contrast to known seals, if external forces do not act on the seal, the latter will remain raised, being able to overcome the obstacles located under the door during the opening and closing manoeuvres thereof.

The device is further characterised in that it comprises closing means suitable for exerting a force opposite to the action of the elastic means and for forcing the lower part of the seal to adopt the first essentially vertical position, corresponding to its closed position, when the drive lever is about to reach its limit rest position corresponding to the closed position of the door, whereas while the door performs its opening or closing movements and while it remains open at rest, the closing means stop exerting said force opposite to the action of the elastic means and the latter make the lower part of the seal adopt the second obliquely raised position.

According to an embodiment variant, said closing means are formed by a second lever, also rotating in a horizontal plane about the mentioned vertical axis of rotation of the door, provided with a pressing surface suitable for coming into contact with the lower part of the seal and exert thereon the force opposite to the action of the elastic means when the door is about to reach, in its rotation corresponding to the closing movement, an angular position immediately before the closed position of the door.

According to this embodiment variant, the second lever is provided with a stop element, intended to be applied against the body of the drive lever and prevent the backward movement of the pressing surface of the second lever when the latter adopts a predetermined angular position with respect to the mentioned drive lever.

According to another feature of the embodiment variant described, the stop element is fixed firmly but in an adjustable manner in a slide of the second lever, its fixing position being able to be varied along the slide and therefore the predetermined angular position after which the rotation of the second lever is prevented being able to varied, thus preventing the backward movement of the pressing surface thereof.

According to another feature of the invention, the closing means are adjusted such that the lower part of the seal does not adopt its first limit rest position, essentially vertical downward position, before the door reaches the closed position, such that the inner face of the lower edge of the lower part of the seal may be applied against the outer face of the lower edge of the frame of the door.

### Brief Description of the Drawings

The attached drawings illustrate, by way of a non-limiting example, an embodiment variant of the invention. In said drawings:
Figure 1 is a perspective view of the lower edge of a door in its open position;
Figure 2 is a section view according to the cut plane AA indicated in Figure 1;
Figure 3 is a perspective view of the lower edge of the door of Figure 1 in its closed position; and
Figure 4, is a section view according to the cut plane BB indicated in Figure 3;

### Detailed Description of the Drawings

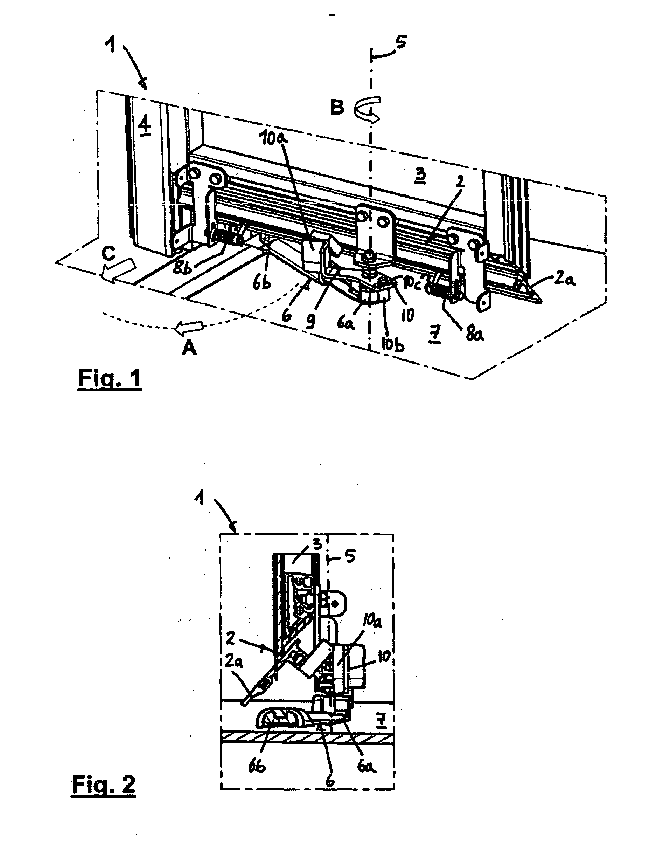

Figures 1 to 4 depict the lower edge of a door 3 provided with a seal 2 to cover the gap between the mentioned lower edge and the floor 7 of a vehicle.

The seal 2 is made of a plastic material and two parts formed by corresponding extruded profiles are distinguished therein, the first of which is an upper part and is fixed to the edge of the door 3, and the second of which is a lower part 2a rotating with respect to the upper part fixed about an imaginary longitudinal axis, horizontally oriented if the seal 2 is duly fixed to the lower edge of the door 3.

To operate the door 3 during the opening and closing manoeuvres, a drive lever 6 rotates in a horizontal plane flush with the floor and about its end 6b. The drive lever 6 drags the door 3 in its movements, which door is assembled rotating about a vertical axis 5 integral with the other end 6a of said drive lever 6. In turn, the edge 4 of the door 3 is guided such that it can only describe back and forth straight trajectories, moving in the vertical plane of the door opening. Accordingly, upon rotating the drive lever 6, the door 3 is forced to rotate about the vertical axis 5 while its edge 4 moves in the vertical plane of the door opening.

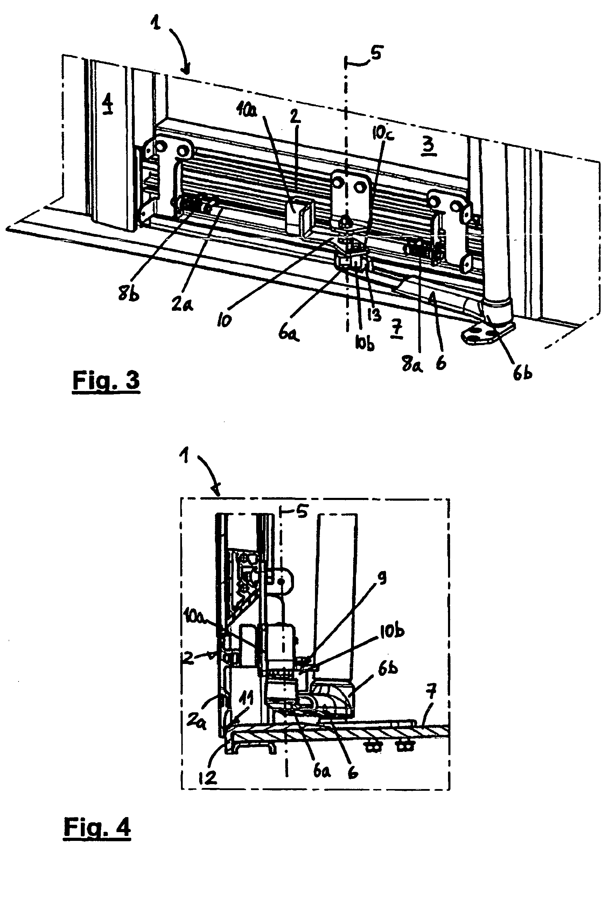

The actuation device 1 depicted in Figures 1 and 3 comprises two elastic means 8a and 8b acting on the lower part 2a of the seal 2 and tending to maintain it in an obliquely raised position, i.e., in a position in which its lower edge is raised with respect to the floor 7 of the vehicle (see Figure 2).

The device 1 further incorporates closing means 9 suitable for exerting a force opposite to the action of the elastic means 8a, 8b and for forcing the mentioned lower part 2a of the seal 2 to adopt an essentially vertical position, corresponding to its closed position, only when the door adopts the position depicted in Figure 3, that position in which the doors of the vehicle are closed. Thus, when the door 3 is moved from the closed position, the closing means 9 stop acting on the seal 2 and the lower part 2a thereof rotates automatically about a longitudinal axis and is raised, being separated from the floor 7 of the vehicle, the door 3 being able to move over the drive lever 6 without the latter representing any obstacle for the movement of the door 3.

The closing means 9 are formed by a second lever 10, also rotating in a horizontal plane about the mentioned vertical axis of rotation 5, which is provided with a pressing surface 10a intended to come into contact with the lower part 2a of the seal 2, and exert thereon the force opposite to the action of the elastic means 8a, 8b when the door 3 is about to reach, in its rotation corresponding to the closing movement, an angular position immediately before the closed position of the door.

Starting from the situation depicted in Figure 1, in which the door 3 is in its open position and the lower part 2a of the seal is in a obliquely raised position (see Figure 2), upon acting the drive lever 6 in the direction indicated by arrow A of Figure 1, the door 3 is moved by the drive lever 6 and forced to rotate in the direction indicated by arrow B, about the vertical axis 5, whereas the edge 4 of the door 3 moves in the direction indicated by arrow C.

During the closing manoeuvre of the door 3, the second lever 10 is pushed by the door 3 and rotates, simultaneously with the door 3, about the vertical axis 5.

When the door 3 is about to reach its closed position, the closing means 9 start exerting pressure on the lower part 2a of the seal which forces the latter to pass from its obliquely raised position to its vertical downward position as the door 3 approaches the end of its path.

To that end, the second lever 10 of the closing means 9 is provided with a stop element 10b, which is applied against the body of the drive lever 6 and prevents the rotation of said second lever 10 and therefore the backward movement of the pressing surface 10a.

It is observed in Figure 3 that the stop 10b is formed in the example depicted by a prominence extending downwardly from the second lever 10 and that the drive lever 6 is provided with a vertical flange 13 on which the mentioned stop 10b is applied.

The angular position of the second lever 10 with respect to the drive lever 6 after which the movement of the mentioned second lever 10 is prevented, can be adjusted by moving the stop 10b.

To that effect, the stop element 10b is fixed firmly but in an adjustable manner in a slide 10c of the second lever 10, its fixing position being able to be varied along the slide and therefore the predetermined angular position after which the rotation of the second lever is prevented being able to be varied, thus preventing the backward movement of the pressing surface 10a.

By means of the device 1 according to the invention, and duly adjusting the above described angular position, it can be achieved that the closing means 9 do not completely move the lower part 2a of the seal 2 until the door 3 has reached its end closing position. This fact allows that in the mentioned closed position, the inner face of the lower edge 11 of the lower part 2a of the seal 2 is applied against the outer face 12 of the lower edge of the frame of the door, as observed in Figure 4.

## Claims

1. An actuation device (1) for a seal (2) for lower edges of pivoted doors (3), particularly of doors of coaches or buses, for sealing the gaps between said edges and the floor (7) of the vehicle, the doors being of those in which, in the opening and closing movements, one of the vertical edges (4) thereof moves in the vertical plane of the door opening between two end rest positions corresponding to the open and closed positions of the door, whereas the door is assembled rotating about a vertical axis of rotation (5) integral with the end (6a) of a drive lever (6) rotating, in a horizontal plane, about its other end (6b) on a point fixed to the floor of the vehicle and describing alternating back and forth angular movements for the opening and closing of the door, and the seal being of those comprising a lower part (2a) rotating about a longitudinal axis between two positions, the first of which is an essentially vertical downward position whereas the second of which is an obliquely raised position, the device being **characterised in that** it comprises elastic means (8a, 8b) acting on the lower part of the seal and tending to maintain it in the mentioned second obliquely raised position, and **in that** it comprises closing means (9) suitable for exerting a force opposite to the action of the elastic means (8a, 8b) and for forcing the lower part (2a) of the seal (2) to adopt the first essentially vertical position, corresponding to its closed position, when the drive lever (6) is about to reach its limit rest position corresponding to the closed position of the door (3), whereas while the door performs its opening or closing movements and while it remains open at rest, the closing means stop exerting said force opposite to the action of the elastic means and the latter make the lower part of the seal adopt the second obliquely raised position.

2. The device (1) according to claim 1, **characterised in that** said closing means (9) are formed by a second lever (10), also rotating in a horizontal plane about the mentioned vertical axis of rotation (5) of the door (3), provided with a pressing surface (10a) suitable for coming into contact with the lower part (2a) of the seal (2) and exert thereon the force opposite to the action of the elastic means (8a, 8b) when the door is about to reach, in its rotation corresponding to the closing movement, an angular position immediately before the closed position of the door.

3. The device (1) according to claim 2, **characterised in that** the second lever (10) is provided with a stop element (10b), intended to be applied against the body of the drive lever (6) and prevent the backward movement of the pressing surface (10a) of the second lever when the latter adopts a predetermined angular position with respect to the mentioned drive lever.

4. The device (1) according to claim 3, **characterised in that** the stop element (10b) is fixed firmly but in an adjustable manner in a slide (10c) of the second lever (10), its fixing position being able to be varied along the slide and therefore the predetermined angular position after which the rotation of the second lever is prevented being able to be varied, thus preventing the backward movement of the pressing surface (10a) thereof.

5. The device (1) according to any one of claims 1 to 4, **characterised in that** the closing means (9) are adjusted such that the lower part (2a) of the seal (2) does not adopt its first limit rest position, essentially vertical downward position, before the door (3) reaches the closed position, such that the inner face of the lower edge (11) of the lower part of the seal may be applied against the outer face (12) of the lower edge of the frame of the door.

## Patentansprüche

1. Betätigungsvorrichtung (1) für eine Abdichtung (2) für untere Kanten von Schwingtüren (3), insbesondere von Türen von Reisebussen oder Autobussen, zur Abdichtung der Lücken zwischen den genannten Kanten und dem Boden (7) des Fahrzeugs, wobei die Türen der Art sind, bei welcher bei den Öffnungs- und Schließbewegungen sich eine der vertikalen Kanten (4) derselben in der vertikalen Ebene der Türleibung zwischen zwei Endruhestellungen, entsprechend den Öffnungs- und Schließstellungen der Tür, bewegt, während die Tür so zusammengebaut ist, dass sie sich in Bezug auf eine vertikale Drehachse (5) dreht, welche einstückig mit dem Ende (6a) eines Antriebshebels (6) gebildet ist, welcher sich in einer horizontalen Ebene, in Bezug auf sein anderes Ende (6b) auf einem zum Boden des Fahrzeugs befestigten Punkt dreht und abwechselnde winkelige Hin- und Herbewegungen für das Öffnen und Schließen der Tür beschreibt, und wobei die Abdichtung der Art ist, umfassend einen unteren Teil (2a), welcher sich in Bezug auf eine Längsachse zwischen zwei Stellungen dreht, wobei die Erste eine wesentlich vertikale Stellung nach unten ist, während die Zweite eine schräg angehobene Stellung ist, wobei sich die Vorrichtung **dadurch gekennzeichnet, dass** sie elastische Mittel (8a, 8b) umfasst, welche auf den unteren Teil der Abdichtung wirken und dazu neigen, diesen in der genannten zweiten schräg angehobenen Stellung zu halten, und dass sie Verschlussmittel (9) umfasst, welche dazu geeignet sind, eine Kraft auszuüben, die der Wirkung der elastischen Mittel (8a, 8b) entgegengesetzt ist, und den unteren Teil (2a) der Abdichtung (2) zu zwingen, die erste wesentlich vertikale Stellung, entsprechend ihrer geschlossenen Stellung, anzunehmen, wenn der Antriebshebel (6) kurz davor ist, seine Grenzruhestellung entsprechend der geschlossenen Stellung der Tür (3) zu erreichen, wobei während die Tür ihre Öffnungs- oder Schließbewegungen durchführt und während sie bei Ruhelage geöffnet bleibt, die Verschlussmittel die genannte der Wirkung der elastischen Mittel entgegengesetzte Kraft nicht mehr ausüben und diese dazu führen, dass der untere Teil der Abdichtung die zweite schräg angehobene Stellung annimmt.

2. Vorrichtung (1) nach Anspruch 1, **dadurch gekennzeichnet, dass** die genannten Verschlussmittel (9) von einem zweiten Hebel (10) gebildet sind, welcher sich ebenso in einer horizontalen Ebene in Bezug auf die genannte vertikale Drehachse (5) der Tür (3) dreht, welcher mit einer Druckfläche (10a) versehen ist, die dazu geeignet ist, mit dem unteren Teil (2a) der Abdichtung (2) in Kontakt zu kommen und auf diesen die der Wirkung der elastischen Mittel (8a, 8b) entgegengesetzte Kraft auszuüben, wenn die Tür kurz davor ist, bei ihrer Drehung entsprechend der Schließbewegung, eine Winkelstellung unmittelbar vor der geschlossenen Stellung der Tür zu erreichen.

3. Vorrichtung (1) nach Anspruch 2, **dadurch gekennzeichnet, dass** der zweite Hebel (10) mit einem Anschlagelement (10b) versehen ist, welches dazu vorgesehen ist, gegen den Körper des Antriebshebels (6) angebracht zu werden und die Bewegung der Druckfläche (10a) des zweiten Hebels nach hinten zu verhindern, wenn dieser eine vorbestimmte Winkelstellung in Bezug auf den genannten Antriebshebel annimmt.

4. Vorrichtung (1) nach Anspruch 3, **dadurch gekennzeichnet, dass** das Anschlagelement (10b) in einem Schieber (10c) des zweiten Hebels (10) fest aber einstellbar befestigt ist, wobei seine Befestigungsstellung entlang des Schiebers verändert werden kann und somit die vorbestimmte Winkelstellung, nach welcher die Drehung des zweiten Hebels verhindert wird, verändert werden kann, wobei auf diese Weise die Bewegung nach hinten der Druckfläche (10a) desselben verhindert wird.

5. Vorrichtung (1) nach einem der Ansprüche 1 bis 4, **dadurch gekennzeichnet, dass** die Schließmittel (9) so eingestellt werden, dass der untere Teil (2a) der Abdichtung (2) seine erste Grenzruhestellung, wesentlich vertikale Stellung nach unten, erst annimmt, wenn die Tür (3) die geschlossene Stellung erreicht, so dass die innere Seite der unteren Kante (11) des unteren Teils der Abdichtung gegen die äußere Seite (12) der unteren Kante des Türrahmens angebracht werden kann.

## Revendications

1. Dispositif d'actionnement (1) pour un joint (2) pour bords inférieurs de portes pivotantes (3), en particulier de portes d'autocars ou de bus, pour sceller les interstices entre lesdits bords et le plancher (7) du véhicule, les portes étant du type dans lesquelles, lors du mouvement d'ouverture et de fermeture, un des bords verticaux (4) de celles-ci se déplace dans le plan vertical de la baie de la porte entre deux positions extrêmes de repos correspondant aux positions d'ouverture et de fermeture de la porte, la porte étant assemblée tournante autour d'un axe de rotation vertical (5) solidaire à l'extrémité (6a) d'un levier de commande (6) qui tourne, dans un plan horizontal, autour de son autre extrémité (6b), sur un point fixé au plancher du véhicule et qui décrit des mouvements angulaires alternés de va-et-vient pour l'ouverture et fermeture de la porte, et le joint étant du type comprenant une partie inférieure (2a) tournant autour d'un axe longitudinal entre deux positions, dont première est une position descendante essentiellement verticale, tant que la deuxième est une position élevée en oblique, le dispositif étant **caractérisé en ce qu'**il comprend des moyens élastiques (8a, 8b) agissant sur la partie inférieure du joint et tendant à le maintenir dans ladite position élevée en oblique, et **en ce qu'**il comprend des moyens de fermeture (9) appropriés pour exercer une force opposée à l'action des moyens élastiques (8a, 8b) et pour forcer la partie inférieure (2a) du joint (2) à adopter la première position essentiellement verticale, correspondant à sa position fermée, lorsque le levier de commande (6) est sur le point d'atteindre sa position limite de repos correspondant à la position fermée de la porte (3), où pendant que la porte mène à terme ses mouvements d'ouverture ou de fermeture et pendant qu'elle demeure ouverte en repos, les moyens de fermeture cessent d'exercer ladite force opposée à l'action des moyens élastiques et ces derniers font que la partie inférieure du joint adopte la deuxième position élevée en oblique.

2. Dispositif (1) selon la revendication 1, **caractérisé en ce que** lesdits moyens de fermeture (9) sont formés par un deuxième levier (10) qui tourne également dans un plan horizontal autour dudit axe de rotation vertical (5) de la porte (3), pourvu d'une surface de pression (10a) appropriée pour venir en contact avec la partie inférieure (2a) du joint (2) et exercer sur celle-ci la force opposée à l'action des moyens élastiques (8a, 8b) lorsque la porte est sur le point d'atteindre, dans sa rotation correspondant au mouvement de fermeture, une position angulaire immédiatement avant la position fermée de la porte.

3. Dispositif (1) selon la revendication 2, **caractérisé en ce que** le deuxième levier (10) est pourvu d'un élément de butée (10b), destiné à être appliqué contre le corps du levier de commande (6) et éviter le mouvement vers l'arrière de la surface de pression (10a) du deuxième levier lorsque ce dernier adopte une position angulaire prédéterminée par rapport audit levier de commande.

4. Dispositif (1) selon la revendication 3, **caractérisé en ce que** l'élément de butée (10b) est fixé fermement mais d'une manière ajustable dans une glissière (10c) du deuxième levier (10), sa position de fixation étant apte à être modifiée le long de la glissière et par conséquent la position angulaire prédéterminée, après laquelle la rotation du deuxième levier est empêchée, pouvant être modifiée, en évitant ainsi le mouvement vers l'arrière de la surface de pression (10a) de celui-ci.

5. Dispositif (1) selon l'une quelconque des revendications 1 à 4, **caractérisé en ce que** les moyens de fermeture (9) sont ajustés de manière que la partie inférieure (2a) du joint (2) n'adopte pas sa première position limite de repos, position descendante essentiellement verticale, avant que la porte (3) n'atteigne la position fermée, de manière que la face intérieure du bord inférieur (11) de la partie inférieure du joint peut être appliquée contre la face extérieure (12) du bord inférieure du cadre de la porte
